# FASCICULE DE BREVET EUROPEEN

(11) **EP 0 325 522 B1**
(45) Date de publication et mention de la délivrance du brevet: **12.10.1994**
(21) Numéro de dépôt: 89400127.0
(22) Date de dépôt: 17.01.1989
(51) Int. Cl.: B01D 53/34, C01B 17/05

(54) **Procédé et installation d'épuration d'effluents gazeux contenant de l'hydrogène sulfuré**
Verfahren und Vorrichtung zur Reinigung von Schwefelwasserstoff enthaltenden Abgasen
Process and apparatus for cleaning gaseous effluents containing hydrogen sulphide

(30) Priorité: 18.01.1988 FR 8800486
(43) Date de publication de la demande: 26.07.1989
(73) Titulaire: BERTIN & CIE, F-78373 Plaisir Cédex (FR)
(72) Inventeur: Raymond, Bernard, F-40440 Ondres (FR); Milande, Nicolas, F-40130 Capbreton (FR); JACQUINOT, Bernard, F-40440 ONDRES (FR)
(74) Mandataire: Orès, Bernard

(56) Documents cités:
- EP-A- 0 086 919
- FR-A- 2 298 359
- US-A- 4 414 194

## Description

La présente invention est relative à un procédé et à une installation d'épuration d'effluents gazeux contenant de l'hydrogène sulfuré (H₂S).

L'hydrogène sulfuré est un gaz extrêmement toxique, malodorant même lorsqu'il est présent en quantités très faibles, et corrosif. Sa présence dans les effluents gazeux, industriels en particulier, représente un danger considérable pour la santé des organismes vivants, qu'il s'agisse de l'homme, des animaux ou de l'environnement végétal. Il est donc de la plus grande importance dans la lutte contre la pollution atmosphérique, d'éliminer l'hydrogène sulfuré, de même que les alcoylmercaptans présents dans les effluents gazeux, notamment industriels.

Diverses solutions ont été proposées pour éliminer l'H₂S des effluents gazeux. Les solutions actuellement adoptées dans l'industrie se rangent dans les deux principales catégories suivantes :
- l'incinération des gaz polluants dans les fours. Cette solution a un triple inconvénient : d'une part, on produit du gaz sulfureux, d'autre part, la nuisance olfactive n'est pas totalement détruite ; et en troisième part, le coût énergétique est très élevé.
- le lavage des gaz polluants par des solutions de soude ou d'amine ; toutefois, ce processus d'épuration présente l'inconvénient de nécessiter une consommation énergétique élevée en raison de l'efficacité limitée du transfert de matière et de l'obligation de régénérer les solutions de soude ou d'amine. Un autre inconvénient de ce procédé résulte du fait que l'on récupère des gaz acides que l'on brûle, d'où émission de gaz sulfureux.

D'autres procédés d'élimination de l'H₂S, et éventuellement des alcoylmercaptans, sont en cours de développement : il s'agit de procédés chimiques plus efficaces et plus économiques que les précédents, qui permettent d'obtenir comme sous-produit de la réaction, directement du soufre élémentaire à partir des gaz acides de telle sorte qu'il n'y a pas de pollution secondaire, et qui, en outre, éliminent de façon satisfaisante l'odeur de l'hydrogène sulfuré. On connaît par exemple, par la Demande de Brevet européen EP-A-0 086 919, au nom de Mobil Oil un procédé d'épuration sélectif de l'H₂S et du bioxyde de carbone.

On connaît également par le Brevet américain US-A-4 414 194, au nom de Shell Oil un autre procédé d'extraction de l'H₂S à partir d'un effluent gazeux.

Cependant ces procédés chimiques exigent des conditions, notamment des pressions supérieures à l'atmosphérique et/ou des températures élevées, ou ils créent des contraintes qui s'accommodent mal des techniques usuelles de mise en contact des gaz et des liquides.

Ces procédés chimiques visent à l'oxydation de l'H₂S jusqu'au stade de formation de soufre élémentaire ; cependant les installations nouvelles dans lesquelles ces procédés chimiques sont mis en oeuvre, n'assurent pas un transfert d'oxygène efficace dans les milieux liquides de traitement, ce qui constitue un inconvénient majeur dans la mesure où la vitesse de la réaction d'oxydation, qui dépend de la vitesse de diffusion de l'oxygène dans le liquide de traitement, est relativement lente en raison de la faible vitesse de pénétration de l'oxygène.

L'on connait, par ailleurs, par le Brevet français FR-A-2 298 359 de la Demanderesse, un procédé de mise en contact intime d'un gaz avec un liquide, dans lequel le liquide ruisselle par gravité sous la forme d'une nappe très mince et torrentielle, sur une plaque plane percée d'une multitude de trous de très petit diamètre et inclinée sur la verticale d'un angle compris entre 45 et 60°, tandis que le gaz est dirigé sur ladite plaque inclinée avec une pression suffisante pour traverser les trous et la nappe liquide sous forme d'une multitude de petites bulles de faible durée de vie, l'échange entre liquide et gaz ayant lieu à la surface de ces petites bulles.

La présente invention s'est donné pour but de pourvoir à un procédé et à une installation d'épuration d'effluents gazeux contenant de l'H₂S, qui éliminent les inconvénients des solutions visant au même but proposées dans l'Art antérieur, notamment en ce que la présente invention permet de réaliser l'oxydation de l'H₂S en soufre élémentaire dans des proportions pratiquement quantitatives, grâce à la mise en oeuvre de conditions qui permettent à l'oxygène de pénétrer à grande vitesse dans le milieu liquide de traitement et à la mise en jeu d'un agent favorisant la réaction d'oxydation.

La présente invention a pour objet un procédé d'épuration d'effluents gazeux contenant de l'H₂S et également de l'oxygène, consistant à mettre en contact intime ledit effluent gazeux avec une solution aqueuse d'un agent favorisant la réaction d'oxydation de l'H₂S à la température ambiante ou à une température comprise entre 30° et 40°C, pour oxyder l'H₂S en soufre élémentaire solide, caractérisé en ce que le contact intime entre l'effluent gazeux à épurer et la solution aqueuse de l'agent favorisant la réaction d'oxydation de l'H₂S, constituée par une solution aqueuse de chélate ferrique, est réalisé au niveau des surfaces d'une multitude de petites bulles de gaz formées transitoirement dans le liquide par le passage du gaz à travers une nappe dudit liquide qui ruisselle par gravité suivant un plan incliné, au niveau desquelles surfaces le coefficient de transfert ou conductance gaz-liquide est maximal, et à pression atmosphérique, dans un milieu réactionnel additionné d'un agent stabilisant pour le maintien d'un pH constant de 6,5 et en ce que l'on sépare le soufre élémentaire formé, de la solution aqueuse dudit chélate, par décantation,
et en ce que l'oxydation de l'H₂S par la solution de chélate ferrique et la régénération de ladite solution de chélate ferrique sont simultanées.

Selon un autre mode de mise en oeuvre avantageux du procédé conforme à la présente invention, l'effluent gazeux contient également des alcoylmercaptans, qui sont oxydés en disulfures.

Selon un autre mode de mise en oeuvre du procédé conforme à l'invention, le chélate ferrique est avantageusement une solution aqueuse d'un complexe ferreux ferrique/EDTA, également dénommé masquolate ferrique.

Selon un autre mode de mise en oeuvre avantageux du procédé conforme à l'invention, la concentration en chélate ferrique de la solution aqueuse est de l'ordre de 20 % en poids environ.

La solution aqueuse de chélate ferrique dont l'ion ferrique est réduit en ion ferreux pendant la réaction d'oxydation de l'H₂S, est simultanément régénérée en continu en ion ferrique par l'oxygène présent dans l'effluent gazeux traité, dispersé dans ladite solution aqueuse.

Conformément à l'invention, la solution aqueuse régénérée de chélate ferrique est recyclée dans le processus d'oxydation de l'H₂S contenu dans les effluents gazeux à épurer, après en avoir séparé le soufre élémentaire solide et les disulfures formés, s'il y a lieu.

La présente invention a également pour objet une installation d'épuration d'effluents gazeux contenant de l'H₂S comprenant une colonne de traitement de l'effluent qui comprend une pluralité de plaques planes percées d'une multitude de trous de très petit diamètre, inclinées suivant un angle compris entre 45 et 60° par rapport à la verticale, superposées les unes aux autres et disposées en chicanes sur toute la hauteur de ladite colonne de traitement, qui comporte à sa partie inférieure, une tubulure d'introduction de l'effluent associée à un ventilateur, à sa partie supérieure une conduite d'introduction d'une solution aqueuse d'un agent favorisant la réaction d'oxydation de l'H₂S, associée à un réservoir et une conduite d'évacuation de l'effluent gazeux épuré, laquelle colonne assure le ruissellement "torrentiel" par gravité de ladite solution aqueuse sur les surfaces desdites plaques inclinées et la mise en contact de l'effluent à traiter et de ladite solution aqueuse par passage dudit effluent à travers les trous desdites plaques inclinées sur la surface desquelles la solution aqueuse ruisselle, laquelle installation est caractérisée en ce que pour l'épuration de l'H₂S, elle comprend un décanteur monté à la sortie de la colonne de traitement, et connecté à cette dernière à sa partie inférieure par l'intermédiaire d'une conduite, pour séparer le soufre élémentaire solide formé par l'oxydation de l'H₂S, de la solution aqueuse d'agent favorisant l'oxydation de l'H₂S, lequel décanteur comprend également une conduite d'évacuation du soufre et une conduite reliée par la conduite supérieure d'introduction de ladite solution aqueuse à la colonne de traitement, pour le recyclage de ladite solution aqueuse du décanteur vers la colonne de traitement.

Dans le procédé conforme à la présente invention, le processus chimique d'oxydation, qui met en oeuvre un chélate ferrique tel que le masquolate de fer, l'H₂S et les alcoylmercaptans sont oxydés en soufre élémentaire solide et en disulfures par une solution aqueuse dudit chélate ferrique, tandis que celui-ci est réduit en ion ferreux et est simultanément régénéré en ion ferrique par l'oxygène présent dans l'effluent gazeux traité, l'oxydation de l'H₂S et la régénération de l'ion ferrique étant réalisées de manière simultanée, conformément aux schémas réactionnels (1) à (3) ci-après :

2Fe⁺⁺⁺ + H₂S ---> 2Fe⁺⁺ + 2H⁺ + S (solide) (1)

2Fe⁺⁺⁺ + 2R-SH--->2Fe⁺⁺ + 2H + R-S-S-R (liquide) (2)

2Fe⁺⁺ + 1/₂ O₂ ----> 2Fe⁺⁺⁺ + O⁻⁻ (régénération) (3)

Les avantages d'un tel système physico-chimique sont, entre autres, les suivants :
- la réaction chimique favorisée par la pénétration rapide de l'oxygène, est très rapide et procure des taux d'épuration très élevés, ce qui est d'une importance majeure lorsque l'on sait que le seuil olfactif de l'H₂S est de l'ordre de 10⁻³ ppm en volume ;
- l'oxydation de l'H₂S permet d'obtenir du soufre solide comme produit de la réaction chimique, cet élément facilement récupérable présentant l'intérêt d'être valorisable industriellement ;
- le procédé conforme à l'invention se déroule à la température ambiante ou proche de cette dernière, et à la pression atmosphérique, ce qui rend le procédé facile à mettre en oeuvre et évite de devoir recourir à des appareillages résistants aux températures et aux pressions élevées et nécessitant par conséquent des investissements considérables ;
- les opérations d'oxydation et de régénération sont simultanées, ce qui entraîne des économies en énergie et en investissement ;
- la consommation en réactifs est faible, puisque la solution aqueuse de chélate ferrique est recyclée après régénération et séparation du soufre élémentaire solide produit.

Outre les dispositions qui précèdent, l'invention comprend encore d'autres dispositions, qui ressortiront de la description qui va suivre.

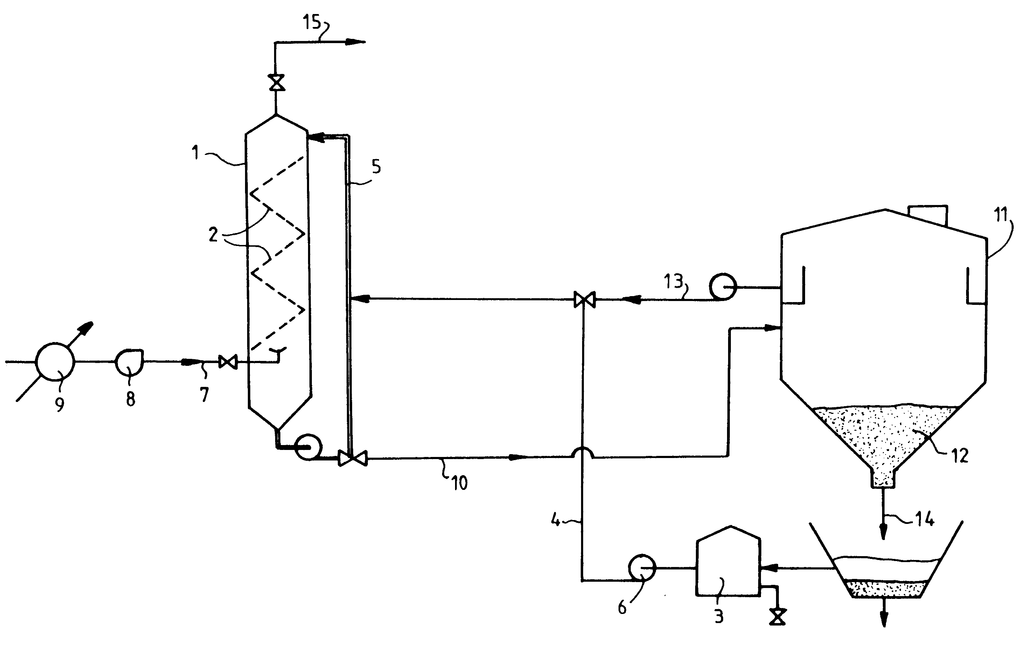

L'invention sera mieux comprise à l'aide du complément de description qui va suivre, qui se réfère au dessin annexé dans lequel :
La figure unique est une représentation schématique d'une installation d'élimination d'H₂S contenu dans des effluents gazeux.

Il doit être bien entendu, toutefois, que ce dessin et les parties descriptives correspondantes, sont donnés uniquement à titre d'illustration de l'objet de l'invention, dont ils ne constituent en aucune manière une limitation.

Une installation telle que celle qui est représentée est apte à traiter les effluents gazeux contenant du H₂S résultant des productions industrielles les plus diverses, tels qu'effluents de fabrication de cellulose ou effluents produits par fermentation des ordures ménagères ou encore effluents apparaissant au niveau des cubilots de production de laine de roche, et...

L'efficacité du procédé et de l'installation conformes à la présente invention est très grande puisque pour une teneur en H₂S de 5000 ppm à l'entrée de l'installation, on a obtenu à la sortie de cette dernière une teneur en H₂S inférieure à 10 ppm.

La colonne 1 de contact effluent gazeux - liquide favorisant l'oxydation, comporte plusieurs plateaux 2 perforés, superposés, inclinés en série, disposés en chicanes, sur lesquels s'écoule la solution aqueuse de chélate ferrique.

Cette dernière est amenée à la colonne 1 à partir d'un réservoir 3 par des conduites 4, 5 et une pompe 6.

L'effluent gazeux est introduit dans la colonne 1 par la conduite 7 et le ventilateur 8, si besoin est, après avoir été refroidi jusqu'à la température ambiante ou au voisinage de celle-ci (30 à 40° C), dans l'échangeur de chaleur 9.

L'H₂S contenu dans l'effluent gazeux est absorbé par la solution aqueuse du chélate ferrique lors du bullage de l'effluent gazeux au niveau de chaque plateau 2. Au contact de ladite solution aqueuse, l'H₂S est instantanément transformé en soufre solide qui, une fois formé sous forme de fines particules, de quelques centaines de microns, en suspension dans ladite solution, qui est évacuée hors de la colonne 1, par la conduite 10 jusqu'au décanteur 11 où s'effectue par gravité la séparation solide/liquide. La solution aqueuse est recyclée dans la colonne 1 par la conduite 13, tandis que le soufre 12 est évacué en 14 à la base du décanteur 11. L'effluent gazeux épuré est évacué de la colonne 1 par la conduite 15.

## Revendications

1. Procédé d'épuration d'effluents gazeux contenant de l'H₂S et également de l'oxygène, consistant à mettre en contact intime ledit effluent gazeux avec une solution aqueuse d'un agent favorisant la réaction d'oxydation de l'H₂S à la température ambiante ou à une température comprise entre 30° et 40°C, pour oxyder l'H₂S en soufre élémentaire solide, caractérisé en ce que le contact intime entre l'effluent gazeux à épurer et la solution aqueuse de l'agent favorisant la réaction d'oxydation de l'H₂S, constituée par une solution aqueuse de chélate ferrique, est réalisé au niveau des surfaces d'une multitude de petites bulles de gaz formées transitoirement dans le liquide par le passage du gaz à travers une nappe dudit liquide qui ruisselle par gravité suivant un plan incliné, au niveau desquelles surfaces le coefficient de transfert ou conductance gaz-liquide est maximal, et à pression atmosphérique, dans un milieu réactionnel additionné d'un agent stabilisant pour le maintien d'un pH constant de 6,5, en ce que l'on sépare le soufre élémentaire formé, de la solution aqueuse dudit chélate, par décantation et en ce que l'oxydation de l'H₂S par la solution de chélate ferrique et la régénération de ladite solution de chélate ferrique sont simultanées.

2. Procédé selon la revendication 1, caractérisé en ce que l'effluent gazeux contient également des alcoylmercaptans, qui sont oxydés en disulfures.

3. Procédé selon l'une quelconque des revendications 1 ou 2, caractérisé en ce que le chélate ferrique est avantageusement une solution aqueuse d'un complexe ferreux ferrique/EDTA.

4. Procédé selon l'une quelconque des revendications 1 à 3, caractérisé en ce que la concentration en chélate ferrique de la solution aqueuse est de l'ordre de 20 % en poids environ.

5. Procédé selon l'une quelconque des revendications 1 à 4, caractérisé en ce que la solution aqueuse régénérée de chélate ferrique est recyclée dans le processus d'oxydation de l'H₂S contenu dans les effluents gazeux à épurer, après en avoir séparé le soufre élémentaire solide et les disulfures formés, s'il y a lieu.

6. Installation d'épuration d'effluents gazeux contenant de l'H₂S et également de l'oxygène comprenant une colonne de traitement (1) de l'effluent qui comprend une pluralité de plaques planes (2) percées d'une multitude de trous de très petit diamètre, inclinées suivant un angle compris entre 45 et 60° par rapport à la verticale, superposées les unes aux autres et disposées en chicanes sur toute la hauteur de ladite colonne de traitement, qui comporte à sa partie inférieure, une tubulure d'introduction (7) de l'effluent associée à un ventilateur (8), à sa partie supérieure une conduite d'introduction (4,5) d'une solution aqueuse d'un agent favorisant la réaction d'oxydation de l'H₂S, associée à un réservoir (3) et une conduite d'évacuation (15) de l'effluent gazeux épuré, caractérisée en ce que pour l'épuration de l'H₂S, ladite installation comprend un décanteur (11) monté à la sortie de la colonne (1) de traitement, et connecté à cette dernière à sa partie inférieure par l'intermédiaire d'une conduite (10), pour séparer le soufre élémentaire solide formé par l'oxydation de l'H₂S, de la solution aqueuse d'agent favorisant l'oxydation de l'H₂S, lequel décanteur comprend également une conduite d'évacuation du soufre (14) et une conduite (13) reliée par la conduite supérieure (5) à la colonne (1), pour le recyclage de ladite solution aqueuse du décanteur vers la colonne de traitement.

## Claims

1. Process for the purification of gaseous effluents containing H₂S and also oxygen, consisting in bringing the said gaseous effluent into intimate contact with an aqueous solution of an agent promoting the reaction of oxidation of H₂S at ambient temperature or at a temperature of between 30° and 40°C, to oxidize the H₂S to solid elemental sulphur, characterized in that the intimate contact between the gaseous effluent to be purified and the aqueous solution of the agent promoting the reaction of oxidation of H₂S, consisting of an aqueous solution of ferric chelate, is produced at the surfaces of a multitude of small gas bubbles formed transiently in the liquid by passing the gas through a sheet of the said liquid which trickles under gravity along an inclined plane, at whose surfaces the gas-liquid transfer coefficient or conductance reaches a maximum, and at atmospheric pressure, in a reaction mixture to which a stabilizing agent has been added to maintain a constant pH of 6.5, in that the elemental sulphur formed is separated from the aqueous solution of the said chelate by sedimentation and in that the oxidation of H₂S by the ferric chelate solution and the regeneration of the said ferric chelate solution are simultaneous.

2. Process according to Claim 1, characterized in that the gaseous effluent also contains alkyl mercaptans, which are oxidized to disulphides.

3. Process according to either of Claims 1 and 2, characterized in that the ferric chelate is advantageously an aqueous solution of a ferrous ferric/EDTA complex.

4. Process according to any one of Claims 1 to 3, characterized in that the ferric chelate concentration of the aqueous solution is of the order of approximately 20 % by weight.

5. Process according to any one of Claims 1 to 4, characterized in that the regenerated aqueous solution of ferric chelate is recycled into the process for oxidation of the H₂S present in the gaseous effluents to be purified, after the solid elemental sulphur and, if applicable, the disulphides formed have been separated therefrom.

6. Plant for the purification of gaseous effluents containing H₂S and also oxygen, comprising an effluent treatment column (1) which includes a plurality of planar plates (2) pierced with a multitude of holes of very small diameter which are inclined at an angle of between 45 and 60° in relation to the vertical, which are superposed above each other and arranged as chicanes over the whole height of the said treatment column, which comprises in its lower part a pipe (7) for introducing the effluent used in combination with a fan (8), in its upper part a conduit (4, 5) for introducing an aqueous solution of an agent promoting the reaction of oxidation of H₂S, connected to a storage vessel (3), and a conduit (15) for discharging the purified gaseous effluent, characterized in that, for the purification of the H₂S, the said plant includes a settler (11) fitted at the exit of the treatment column (1) and connected to the latter in its lower part by means of a conduit (10), for separating the solid elemental sulphur formed by the oxidation of the H₂S from the aqueous solution of agent promoting the oxidation of H₂S, which settler also includes a conduit for discharging the sulphur (14) and a conduit (13), connected by the upper conduit (5) to the column (1), for recycling the said aqueous solution from the settler towards the treatment column.

## Patentansprüche

1. Verfahren zur Reinigung von H₂S und ebenso Sauerstoff enthaltenden Abgasen, wobei man das Abgas mit einer wäßrigen Lösung, die ein Mittel enthält, das die Oxidationsreaktion von H₂S bei Umgebungstemperatur oder einer Temperatur zwischen 30° und 40°C begünstigt, in innigen Kontakt bringt, um H₂S zu elementarem festem Schwefel zu oxidieren, dadurch **gekennzeichnet,** daß der innige Kontakt zwischen dem zu reinigenden Abgas und der wäßrigen Lösung mit dem Mittel, das die Oxidationsreaktion von H₂S begünstigt und aus einer wäßrigen Lösung eines Eisen(III)-chelats besteht, auf den Oberflächen einer Vielzahl von kleinen Gasbläschen, die sich vorübergehend in der Flüssigkeit durch Passage des Gases durch einen Mantel der Flüssigkeit, die durch die Schwerkraft entlang einer geneigten Fläche rieselt, gebildet haben, wobei auf der Ebene der Oberflächen der Transfer- oder Leitfähigkeitskoeffizient Gas-Flüssigkeit maximal ist, und bei Atmosphärendruck in einem Reaktionsmedium, das mit einem Stabilisator zum Erhalt eines konstanten pH-Werts von 6,5 versetzt wurde, durchgeführt wird, daß der gebildete elementare Schwefel von der wäßrigen Lösung des Chelats durch Dekantieren abgetrennt wird und daß die Oxidation von H₂S durch die Eisen(III)-chelatlösung und die Regeneration der Eisen(III)-chelatlösung gleichzeitig durchgeführt werden.

2. Verfahren nach Anspruch 1, dadurch **gekennzeichnet,** daß das Abgas ebenso Alcoylmercaptane, die zu Disulfiden oxidiert werden, enthält.

3. Verfahren nach einem der Ansprüche 1 oder 2, dadurch **gekennzeichnet,** daß das Eisen(III)-chelat vorteilhafterweise eine wäßrige Lösung eines Komplexes Eisen(II)/(III)/EDTA ist.

4. Verfahren nach einem der Ansprüche 1 bis 3, dadurch **gekennzeichnet,** daß die Konzentration an dem Eisen(III)-chelat der wäßrigen Lösung im Bereich von etwa 20 Gew.-% liegt.

5. Verfahren nach einem der Ansprüche 1 bis 4, dadurch **gekennzeichnet,** daß die regenerierte wäßrige Lösung des Eisen(III)-chelats in das Verfahren zur Oxidation von H₂S, der in den zu reinigenden Abgasen enthalten ist, recycliert wird, nachdem daraus der gegebenenfalls gebildete elementare feste Schwefel und die Disulfide entfernt wurden.

6. Vorrichtung zur Reinigung von H₂S und ebenso Sauerstoff enthaltenden Abgasen, umfassend eine Behandlungskolonne (1) für das Abgas, welche eine Vielzahl von ebenen Platten (2), die von einer Vielzahl von Löchern mit einem sehr kleinen Durchmesser durchbohrt sind, die in einem Winkel zwischen 45 und 60°, bezogen auf die Vertikale, geneigt sind, übereinander angeordnet sind und in Schikanen über die ganze Höhe der Behandlungskolonne angeordnet sind, umfaßt, welche in ihrem unteren Teil einen Einführstutzen (7) für das Gas zusammen mit einem Ventilator (8), an ihrem oberen Teil eine Einführleitung (4,5) für eine wäßrige Lösung des Mittels, das die Oxidationsreaktion von H₂S begünstigt, zusammen mit einem Reservoir (3) und einer Schwemmleitung (15) für das gereinigte Abgas besitzt, dadurch **gekennzeichnet,** daß zur Reinigung von H₂S die Vorrichtung eine Dekantiervorrichtung (11) umfaßt, die am Ausgang der Behandlungskolonne (1) angebracht ist und mit der letzteren in ihrem unteren Teil über eine Leitung (10) verbunden ist, um den durch Oxidation von H₂S gebildeten elementaren Schwefel von der wäßrigen Lösung des Mittels, das die Oxidation von H₂S begünstigt, abzutrennen, wobei die Dekantiervorrichtung auch eine Schwemmleitung für den Schwefel (14) und eine Leitung (13), die über die obere Leitung (5) mit der Kolonne (1) verbunden ist, umfaßt, um die wäßrige Lösung von der Dekantiervorrichtung in die Behandlungskolonne zu recyclieren.
